Europäisches Patentamt

European Patent Office

Office européen des brevets

(19)

(11) Veröffentlichungsnummer : **0 315 074 B1**

# EUROPÄISCHE PATENTSCHRIFT

(12)

(45) Veröffentlichungstag der Patentschrift :
25.09.91 Patentblatt 91/39

(51) Int. Cl.$^5$ : **G01N 35/08**

(21) Anmeldenummer : 88118014.5

(22) Anmeldetag : 28.10.88

(54) Gerät zur Fliess-Injektionsanalyse.

(30) Priorität : 05.11.87 DE 3737604

(43) Veröffentlichungstag der Anmeldung :
10.05.89 Patentblatt 89/19

(45) Bekanntmachung des Hinweises auf die
Patenterteilung :
25.09.91 Patentblatt 91/39

(84) Benannte Vertragsstaaten :
AT CH DE FR GB IT LI NL SE

(56) Entgegenhaltungen :
DE-B- 1 498 603
GB-A- 2 189 597
US-A- 4 314 824

(73) Patentinhaber : Gesellschaft für
Biotechnologische Forschung mbH (GBF)
Mascheroder Weg 1
W-3300 Braunschweig-Stöckheim (DE)

(72) Erfinder : Flossdorf, Josef, Dr., Dipl.-Ing.
Mascheroder Weg 1
W-3300 Braunschweig (DE)
Erfinder : Papamichael, Neophytos, Dr.,
Dipl.-Ing.
Mascheroder Weg 1
W-3300 Braunschweig (DE)
Erfinder : Hanisch, Detlef, Dipl.-Ing.
Mascheroder Weg 1
W-3300 Braunschweig (DE)
Erfinder : Schillig, Henning, Dipl.-Ing.
Mascheroder Weg 1
W-3300 Braunschweig (DE)

(74) Vertreter : Boeters, Hans Dietrich, Dr. et al
Boeters & Bauer Breiteranger 15
W-8000 München 90 (DE)

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung bezieht sich auf ein Gerät zur Fließ-Injektions-Analyse, umfassend eine Reaktionsschleife, ein oder mehrere Pumpen, ein Injektionsventil, ein oder mehrere Detektoren und eine Auswerteeinrichtung.

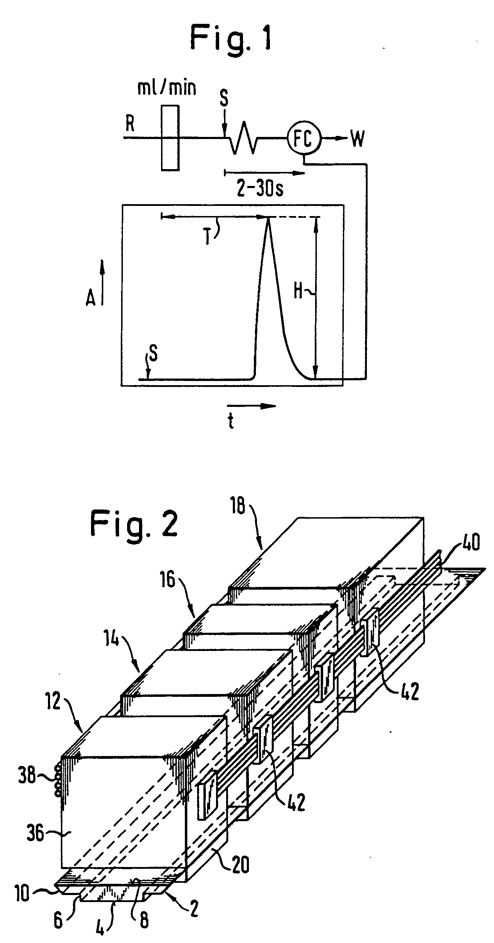

Die Fließ-Injektions-Analyse (FIA) ist ein naßchemisches Analyseverfahren, das sich in den letzten Jahren zu einer wertvollen und häufig angewandten Methode entwickelt hat. Bei der Fließ-Injektions-Analyse wird die zu analysierende Probe in eine Strömung einer geeigneten Flüssigkeit (Trägerflüssigkeit) injiziert und zusammen mit dieser einem Detektionssystem zugeführt. Der Aufbau einer Fließ-Injektions-Analysegerätes ähnelt daher demjenigen einer Flüssig-Chromatographie-Anordnung, wobei die Trennsäule jedoch durch eine Reaktionsschleife ersetzt ist. Die (meist peristaltische) Pumpe dient zum Antreiben der Trägerflüssigkeit. Die zu analysierende Probe wird durch das Injektionsventil (meist ein rotierendes 2-, 3-Wegeventil) in die Trägerflüssigkeit injiziert. Der Detektor zeigt den Probendurchgang an, und in der Auswerteeinrichtung wird der Analytgehalt der Probe quantitativ erfaßt. Dieses Funktionsprinzip ist in Fig. 1 (aus J. Ruzicka und E.H. Hansen 'Flow Injection Analysis' in 'Chemical Analysis', Band 62, John Wiley and Sons, New York, 1981) schematisch veranschaulicht, wobei R den Träger- bzw. Reagenzstrom, S den Ort der Probeninjektion, FC eine Druckflußzelle, W das Abwasser, A die Signalamplitude und H die Impulshöhe darstellt. Bei der einfachsten Durchführungsform einer Fließ-Injektions-Analyse könnte im Trägerstrom ein Reagenz enthalten sein, das mit dem Analyten unter Farbstoffbildung reagiert. Eine Analysereaktion könnte beispielsweise sein, daß $Cl^-$-Ionen Rhodanid aus $Hg_2(^I)(SCN)_2$ verdrängt. Nach Zusatz von $Fe^{3+}$-Ionen entsteht eine blutrote Färbung und das Photometer kann bei einer Wellenlänge von 480 nm messen. Die Fließ-Injektions-Analyse ist zwar kein kontinuierliches Analysenverfahren, jedoch ist die Wiederholrate der Einzelmessungen im allgemeinen so hoch, daß das Verfahren für viele Anwendungsfälle als quasi kontinuierliches Verfahren angesehen werden kann.

Die Fließ-Injektions-Analyse ist nicht auf den Anwendungsfall beschränkt, daß eine zu analysierende Probe in eine Strömung aus einer ein Reagenz enthaltenden Flüssigkeit injiziert wird. Im Fall teurer Reagenzien kann es vorteilhafter sein, das Reagenz in die Probe zu injizieren. Sind Reagenz und Probe teuer, können auch Probe und Reagenz gleichzeitig über ein Doppelaufgabeventil in eine Strömung aus einer Trägerflüssigkeit injiziert werden. Dieses Verfahren wird als 'Merging Zone'-Verfahren bezeichnet.

Als Detektoren sind nicht nur Photometer wie erwähnt geeignet, sondern letztendlich jede Einrichtung, die die chemische Nachweisreaktion quantitativ in ein elektrisches Signal umwandelt. Detektoren können beispielsweise Fluorimeter, Refraktometer, Lumineszenzdetektoren, Trübungsmesser, pH- und ionensensitive Elektroden, voltrametrische und amperometrische Detektoren, Leitfähigkeitsmesser, Thermistoren, Halbleiterstrukturen (FETs) etc. sein. Die Fließ-Injektions-Analyse ist auch nicht auf naßchemische Nachweise beschränkt. Durch den Einsatz von Enzymen in gelöster oder immobilisierter Form, von immobilisierten Antigenen/Antikörpern, von Organellen und von Mikroorganismen läßt sich der Anwendungsbereich der Fließ-Injektions-Analyse stark erweitern.

Im folgenden werden einige bekannte Fließ-Injektions-Analysegeräte mehr im einzelnen beschrieben.

Ein von der Tecator GmbH, 6054 Rodgau angebotenes Grundgerät (Typ 5020) umfaßt zwei mehrkanalige, peristaltische Pumpen, ein Injektionsventil, ein Modul zum Mischen der Proben- und Reagenzströme sowie eine Mikroprozessorsteuerung, mit deren Hilfe die Analyseabläufe vorprogrammiert werden können. Eine Diffusionsstufe, eine Extraktionsstufe sowie ein Thermostat zum Erhitzen der Reaktionsschleifen können nachgerüstet werden. Ein Probenaufgabeautomat sowie Schreiber und Drucker können extern angeschlossen werden. Je nach Betriebsart wird das Detektorsignal speziell ausgewertet, z.B. können die Signalhöhe, -fläche, -breite und -anstiegszeit ausgewertet werden. Im Gerät sind die Pumpen, das Injektionsventil sowie die Steuerungselektronik fest eingebaut. Die Gehäuseabmessungen sind etwa 45 cm × 45 cm × 20 cm. Soll eine mehrkanalige Anordnung verwendet werden, muß eine entsprechende Anzahl von Einzelgeräten nebeneinandergestellt werden.

Ein weiteres bekanntes Fließ-Injektions-Analysegerät der Chem Lab weist eine 5-Kanal-Pumpe, ein Injektionsventil, Heizeinrichtungen für die Reaktionsschleifen und ein Filterphotometer mit Glasfaseroptik und Durchflußküvette auf, die in einem Gehäuse mit den Abmessungen 30 cm × 38 cm × 18 cm fest eingebaut sind. An das Photometer können ein Schreiber und Mikroprozessor angeschlossen werden. Eine Erweiterung um einen Autosampler sowie eine wahlweise Kopplung mit einem Schreiber und/oder Datenerfassungs- und Auswertesystem sind möglich. Soll mit einer Mehrkanalanordnung gearbeitet werden, müssen mehrere komplette Geräte nebeneinandergestellt werden.

Von Hitachi wird außerdem ein Grundgerät (Abmessungen 30 cm × 40 cm × 55 cm, Typ K-1000) angeboten, das eine zweikanalige Kolbenpumpe, eine vierkanalige peristaltische Pumpe, ein Injektionsventil und temperierbare Reaktionsschleifen fest eingebaut enthält. Ein automatischer Probengeber, eine Lösungsmittelextraktionseinheit sowie optische Detektoren (Photometer, Fluoreszenzspektrometer) können

2

extern angekoppelt werden. Eine Nachrüstung mit Drucker, Plotter und Datenstationen ist möglich. Ein Mehrkanalbetrieb nur mit dem Grundgerät hingegen ist nicht möglich.

Die Fließ-Injektions-Analyse kann wie erwähnt in einem großen Anwendungsgebiet eingesetzt werden. Die derzeit im Handel erhältlichen Geräte sind jedoch nicht in zufriedenstellendem Maße flexibel und es sind nicht sämtliche Einheiten erhältlich, die für Analysen benötigt werden, beispielsweise Enzymreaktoren und von Photometern verschiedene Detektoren. Des weiteren steigt der Wunsch nach mehrkanaligem Aufbau, der mit den bekannten Geräten nur wenig zufriedenstellend gelöst werden kann.

Der Erfindung liegt daher die Aufgabe zugrunde, ein Fließ-Injektions-Analysegerät zu schaffen, daß vielseitig für unterschiedliche Anwendungszwecke einsetzbar und kostengünstig herstellbar ist.

Diese Aufgabe ist erfindungsgemäß bei einem Fließ-Injektions-Analysegerät der eingangs genannten Art dadurch gelöst,

— daß die Pumpe, das Injektionsventil und der Detektor jeweils auf einer mit einer Führung versehenen Grundplatte angebracht sind,

— daß die Pumpe, das Injektionsventil und der Detektor mit der Grundplatte jeweils, samt ihren eventuellen Gehäusen und Trägerplatten gleiche maximale Breiten- und Höhenabmessungen aufweisen,

— daß die Grundplatten mit Pumpe, Injektionsventil und Detektor auf der Traghalterung zu der Analysenanordnung zusammengefügt sind und

— daß die Grundplatten auf der Traghalterung mittels einer lösbaren Befestigung arretiert sind.

Vorteilhafte Weitergestaltungen des erfindungsgemäßen Analysegeräts sind Gegenstand der abhängigen Ansprüche.

Das erfindungsgemäße Fließ-Injektions-Analysegerät zeichnet sich durch eine hohe Flexibilität aus. Die Grundeinheiten wie Pumpe, Injektionsventil, Detektor etc. sind nicht fest eingebaut, sondern hintereinander lediglich zu einem für eine bestimmte Analyse vorgesehenen Gerät und für dessen Betrieb zusammengestellt und zusammengebaut. Soll das Gerät modifiziert oder aus den Grundeinheiten eine andere Geräteversion zusammengestellt werden, können die Grundeinheiten einzeln entnommen und auch wieder zurückgesetzt werden. Dies ermöglicht es, auf einfache Weise jede beliebige Version eines Fließ-Injektions-Analysegerätes zu realisieren, und ferner, die einzelnen Grundeinheiten sozusagen logisch, d.h. in Fließrichtung des Reagenzienstroms (von der Pumpe zum Detektionssystem hin), anzuordnen.

Die Flexibilität des erfindungsgemäßen Geräts wird insbesondere auch dadurch ermöglicht, daß die Grundbausteine in der Form und in den äußeren Abmessungen aufeinander abgestimmt sind. Sie haben sämtlich einheitliche Abmessungen in der Breite und in der Höhe, so daß ein erfindungsgemäßes Analysegerät in genormte Einschübe paßt oder nur einen Teil eines solchen Einschubes ausfüllt, beispielsweise drei Höheneinheiten (ca. 132 mm) und 1/4 eines 48 cm (19 Zoll)-Einschubs. Bei entsprechenden Abmessungen ist es so möglich, mehrere Geräte in einem Einschub unterzubringen. Es muß dann lediglich die Randbedingung eingehalten werden, daß die zugekauften Pumpen und Ventile, Thermostat, Photometer, etc. die lichten Maße 10 cm × 10 cm nicht überschreiten. Die Bautiefe des Geräts ist nicht kritisch, da ein längerer Einschub gewählt werden kann.

Die flexible Ausgestaltung des erfindungsgemäßen Analysegeräts ergibt sich dadurch, daß die Grundeinheiten wie Pumpe, Injektionsventil und Detektor jeweils auf einer Grundplatte angebracht sind und die Grundplatte mit einer Führung ausgebildet ist. Die Grundplatten sind wiederum auf einer Traghalterung angeordnet derart, daß die Grundeinheiten ähnlich wie optische Komponenten auf optischen Bänken mittels Reitern verschiebbar sind. Nach Zusammenfügung werden die Grundplatten auf der Traghalterung fixiert, wobei die Befestigung selbstverständlich wieder lösbar ist.

Bevorzugt ist die Traghalterung jeweils mit einer Schiene und sind die Grundplatten jeweils mit einer Schwalbenschwanzführung ausgebildet. Es sind jedoch auch andere Führungen denkbar. Eine einfache Fixierung der Grundplatten auf der Traghalterung ist eine Klemmung.

Die Verbindungsschläuche der einzelnen Grundeinheiten wie Pumpe, Injektionsventil und Detektor sind zweckmäßig zu einer Schlauchschiene, sozusagen zu einem Schlauchbus, zusammengefügt. Eine derartige Schlauchsammelleitung ermöglicht bei einheitlicher Ausführung der Anschlüsse eine raumsparende und außerordentliche flexible Verbindung der Schlauchleitungen.

Entsprechend sind die elektrischen Verbindungsleitungen bevorzugt als Bus ausgeführt. Derartige Sammelleitungen können z.B. Flachbandkabel, mehradrige Kabel etc. und Steckverbindungen umfassen. Bei einem Ausführungsbeispiel des erfindungsgemäßen Analysegerätes ist die Schlauchschiene auf einer Seite und der elektrische Bus auf der anderen Seite des Gerätes angeordnet.

Wie erwähnt sind die Breiten- und Höhenabmessungen zweckmäßig jeweils gleich der Breite und Höhe genormter Einschübe oder einfacher Bruchteile davon, wodurch der Geräteeinbau außerordentlich kostengünstig wird. Die Handhabung des Gerätes vereinfacht sich wesentlich dadurch, daß die Traghalterung an einer Frontplatte senkrecht zu dieser befestigt ist und mit einer Gleitführung ausgebildet ist. Ein Gerät braucht dann

3

lediglich in Vorwärts- bzw. Rückwärtsrichtung eingeschoben bzw. herausgezogen zu werden.

Die Grundeinheiten können direkt auf einer Grundplatte angeordnet sein. Je nach den Abmessungen kann auch eine senkrechte Trägerplatte auf der Grundplatte angeordnet sein. An einer solchen Trägerplatte ist beispielsweise die Pumpe oder das Injektionsventil befestigt. Zweckmäßig ist dabei auf einer Seite der Trägerplatte die Pumpe bzw. das Ventil und auf der anderen Seite der Trägerplatte jeweils der Antriebsmotor befestigt. Ein Zapfen greift jeweils durch die Trägerplatte in die Pumpen- bzw. Ventilachsenkupplung. Dies ermöglicht den Einsatz allgemein erhältlicher Pumpen, Ventile und Motoren. Die Kupplungsart ist bekannt.

Erfindungsgemäß ist zwar vorgesehen, derzeit übliche Grundeinheiten zu verwenden. Es sind jedoch speziell für den flexiblen Aufbau des erfindungsgemäßen Analysegerätes angepaßte Grundeinheiten entwickelt worden.

So wurde ein Thermostat entwickelt, der auf einer Grundplatte eingebaut ist und ein wärmeisoliertes Außengehäuse mit Heizung und einen in das Außengehäuse eingeschobenen Innenkörper umfaßt, auf dem Schlauch als Reaktionsschleife aufgewickelt ist. Die Thermostatanordnung enthält selbstverständlich auch die zur Temperaturvorwahl und deren Regelung erforderliche Elektronik. Es ist beispielsweise vorgesehen, mittels Jumper bzw. Programm vier frei wählbare Temperaturen (z.B. 25, 37, 50 und 80°C) einzustellen. Als Versorgung ist wie für alle Grundeinheiten eine Spannungsquelle von 24 V AC vorgesehen. Der neu entwickelte Thermostat unterscheidet sich wesentlich von einem von der Tecator GmbH angebotenen Thermostaten mit kontinuierlich verstellbarer Temperaturwahl.

Es ist durch die Erfindung ferner eine Diffusions- und pH-Sensorstufe entwickelt worden, die auf einer Grundplatte eingebaut ist und aus einem Gehäuse besteht, in dem ein Gasaustauscher angeordnet ist, in das Austauscherkanäle für den Gasdonor- und Gasakzeptorstrom münden, und in das zwei am Gehäuse angebrachte Durchflußelektroden, eine pH-sensitive Elektrode mit einer Flüssigmembran und eine Referenzelektrode, ragen. Die pH-sensitive Elektrode ist zweckmäßig mit einer Plastikmembran ausgebildet, deren Herstellung beispielsweise in 'A Hydrogen Ion-Selective Liquid-Membrane Electrode Based on Tri-n-Dodecylamine as Neutral Carrier' von P. Schulthess et al., Analytica Chimica Acta 131, 1981, Seiten 11 bis 116 beschrieben ist. Von der Funktion her ist eine mit einer solchen Flüssigmembran ausgerüstete Elektrode in dem in der Fließ-Injektions-Analyse interessierenden pH-Bereich einer herkömmlichen Glaselektrode ebenbürtig. Eine Flüssigmembran-Elektrode weist jedoch wesentliche Vorteile gegenüber einer Glaselektrode auf, denn sie ist leicht herzustellen, kostengünstig, klein und bruchfest. Außerdem eignen sich Glaselektroden aufgrund ihrer Abmessungen (übliche Schaftlängen 130 bis 150 mm) und des kugelförmigen Diaphragmas nicht ohne weiteres für einen Einsatz in Strömungssystemen. Die erfindungsgemäße Diffusions- und pH-Sensorstufe weist vorteilhaft einen integrierten Gastauscher auf, der spezielle Analysentechniken ermöglicht, beispielsweise die Erfassung von Ammonium-Ionen als $NH_3$, Carbonat-Ionen als $CO_2$ etc. oder den Nachweis von Substraten oder Enzymen, die die entsprechenden Ionen als Produkte liefern.

Durch die Erfindung ist auch ein Photometer als Grundeinheit des neuen Analysegeräts entwickelt worden. Das Photometer ist auf einer Grundplatte eingebaut und besteht aus einem Gehäuse, in dem eine Durchflußküvette mit einer senkrechten Küvettenbohrung angeordnet ist. An einem Ende der Küvettenbohrung ist eine Beleuchtungsquelle und am anderen Ende ein lichtelektrischer Sensor angeordnet. Als Beleuchtungsquelle werden bevorzugt Lumineszenzdioden verwendet, die in den Farben dunkel- und hellrot (660 bzw. 635 nm), gelb (590 nm) und grün (560 nm) bzw. blau (480 nm) zur Verfügung stehen. Die Farbreinheit des Lichtes, gemessen an der Breite der Absorptionsbanden von im Sichtbaren absorbierenden Farbstoffen, ist ausreichend hoch, so daß auf Spektralfilter verzichtet werden kann. Anstelle oder zusätzlich zu den Lumineszenzdioden ist auch vorgesehen, ggf. Lichtleitfaserkabel zu verwenden, an die externe Lampen angeschlossen werden können. Mit Hilfe von Sperrfiltern ist eine Umrüstung des Photometers zu einem Fluoreszenzspektrometer möglich.

Eine Weitergestaltung des erfindungsgemäßen Analysegeräts ist möglich durch den Einbau von Enzymreaktoren, ggf. als Erweiterung des ohnehin vorhandenen Thermostaten, ionen- und gassensitiven Elektroden in der ohnehin vorhandenen Elektrodengrundeinheit und weiteren speziellen Detektoren wie Leitfähigkeitsdetektoren, elektrochemische Zellen, Lumineszenzdetektoren etc. An das erfindungsgemäße Analysegerät, insbesondere in der mehrkanaligen Ausführung, ist vorteilhaft ein Rechner angekoppelt. Dieser steuert zeitlich Ventile und Pumpen, führt bestimmte Analysetechniken durch und wertet beispielsweise die Meßsignale aus. Die Ergebnisse können dann gedruckt, geplottet, gespeichert und/oder über genormte Schnittstellen an weitere Rechner, Datenstationen, Regel- und Überwachungseinrichtungen übergeben werden.

Die Erfindung wird im folgenden weiter anhand bevorzugter Ausführungsbeispiele und der Zeichnung erläutert. In der Zeichnung zeigen :

Fig. 1    eine Veranschaulichung der Grundfunktion eines Fließ-Injektions-Analysegeräts,

Fig. 2    ein zusammengebautes Analysegerät,

4

| Fig. 3 | eine Veranschaulichung des Grundaufbaus eines Analysegeräts anhand einer Grundplatte (a) und einer Grundplatte mit Trägerplatte (b), |
| Fig. 4 | einen Thermostaten für das Gerät, |
| Fig. 5 | eine Diffusions- und pH-Sensorstufe für das Analysegerät und |
| Fig. 6 | ein Photometer für das Analysegerät. |

In Fig. 2 ist ein erfindungsgemäßes Fließ-Injektions-Analysegerät im nicht eingebauten Zustand veranschaulicht. Es umfaßt eine als Schiene ausgebildete langgestreckte Traghalterung 2. Die Traghalterung 2 ist aus Plattenmaterial gefertigt und auf der Oberseite 8 und der Unterseite 4 flach ausgebildet. An den Rändern ist die Traghalterung mit einem Profil versehen, bei dem es sich im dargestellten Ausführungsbeispiel um das Gegenstück (Prisma) einer Schwalbenschwanzführung 10 handelt. Auf der Unterseite weist die Traghalterung ferner Ausnehmungen 6 auf, die als Gleitführung der Traghalterung in einem Gehäuse, z.B. einem 48 cm (19")-Gehäuse dienen. In einem solchen Gehäuse können zur Führung der Traghalterung 2 als Gegenstücke bzw. Führungs-elemente Rund- oder andere Profile befestigt sein.

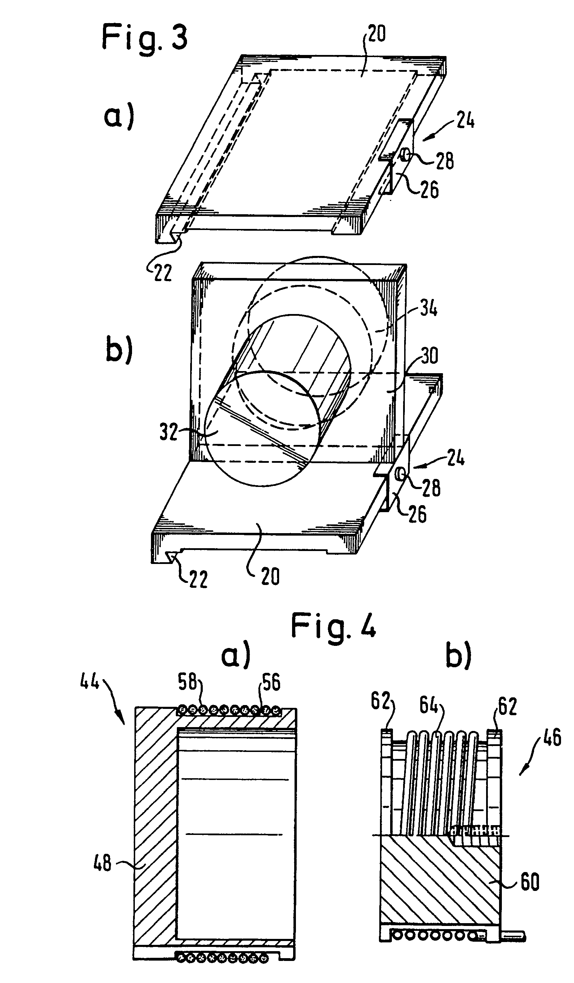

Auf der Traghalterung 2 sind Grundeinheiten 12, 14, 16 und 18 angeordnet, die zusammen das eigentliche Gerät bilden. Die Grundeinheiten 12 bis 18 enthalten beispielsweise die Pumpe, das Injektionsventil und einen Detektor, die jeweils auf einer Grundplatte 20 angebracht sind. Eine solche Grundplatte 20 ist in Fig. 3 (a) in vergrößertem Maßstab dargestellt. Die Grundplatte 20 ist plattenförmig ausgebildet, beispielsweise aus Metall, und ist auf der Unterseite mit einer Führung 22 versehen, bei der es sich im dargestellten Ausführungsbeispiel um eine Schwalbenschwanzführung handelt. Mittels dieser Führung ist die Grundplatte 20 auf der Traghalterung 2 verschiebbar gehaltert. Für eine Arretierung der Grundplatte 20 auf der Traghalterung 2 ist eine Klemmeinrichtung 24 seitlich an der Grundplatte 20 angeordnet. Im gezeigten Ausführungsbeispiel ist die Klemmeinrichtung 24 als Klammer 26 ausgebildet, die die Grundplatte 20 und die Schiene der Traghalterung 2 umgreift und mittels einer Schraube 28 festgeklemmt ist.

Auf den Grundplatten sind die Komponenten des Analysegeräts entweder direkt oder an senkrechten Trägerplatten 30 montiert. Eine solche Trägerplatte 30 ist in Fig. 3 (b) veranschaulicht. Im gezeigten Ausführungsbeispiel ist auf der Vorderseite der Trägerplatte 30 ein Pumpenkörper 32 und auf der Rückseite der Trägerplatte ein Pumpenmotor 34 angebracht.

Die Grundplatten 20 schließen bündig mit darauf angeordneten Pumpen, Ventilen oder anderen Gerätekomponenten zusammen mit eventuell vorhandenen, die Gerätekomponenten umschließenden Gehäusen 36 ab. Die maximalen Breiten- und Höhenabmessungen der Pumpen, Ventile oder anderer Gerätekomponenten samt ihren eventuellen Gehäusen 36 bzw. der Trägerplatten 30 sind jeweils gleich, während die Tiefen entsprechend den eingebauten Komponenten variieren. In Fig. 2 links ist ein Strang 38 aus Verbindungsschläuchen der Geräteeinheiten dargestellt, die zu einer Schlauchschiene zusammengefügt sind. Auf der anderen Seite der Gehäuse ist jeweils ein sich in Längsrichtung zur Traghalterung 2 erstreckender elektrischer Bus 40 angebracht. Im dargestellten Ausführungsbeispiel besteht der Bus aus Flachbandkabeln, die mittels Steckverbindungen 42 zusammengefügt sind. Über die Steckverbindungen 42 steht der Bus auch mit den einzelnen Komponenten des Analysegerätes in Verbindung.

In Fig. 4 ist ein Thermostat dargestellt, der zum Einsatz in einem erfindungsgemäßen Analysegerät entwickelt wurde. Der Thermostat besteht im wesentlichen aus zwei Teilen, nämlich einem zylindrischen Außengehäuse 44 und einem zylindrischen Innenkörper 46. Das Außengehäuse 44 besteht aus Metall und ist nach allen Seiten wärmeisoliert ausgebildet. Es weist eine Rückwand 48 mit größerer Wandstärke und eine Ausnehmung 56 auf, in der Heizwendeln 58 nebeneinander angeordnet sind. Der zylindrische Innenkörper 46 ist am vorderen und am rückwärtigen Ende jeweils mit einem Flansch 62 versehen. Zwischen den Flanschen 62 ist auf dem als Wickelkörper dienenden Innenkörper 46 ein Schlauchabschnitt 64 als Reaktionsschleife aufgewickelt.

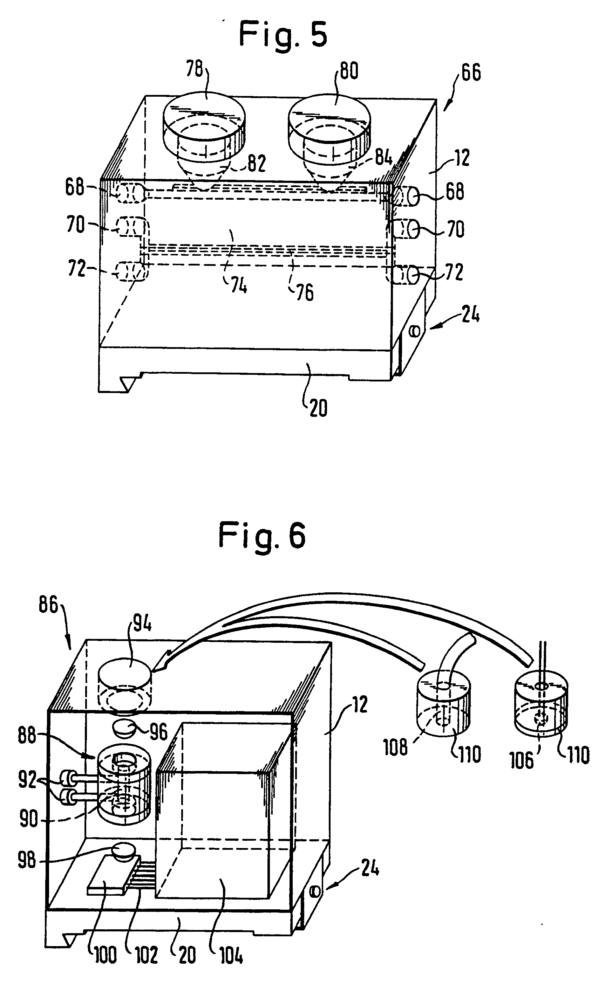

Fig. 5 zeigt eine Diffusions- und pH-Sensorstufe 66. Das Gehäuse 12 ist mit Elektrodenanschlüssen 68 und Kanalanschlüssen 70, 72 für einen Gasaustauscher 74 versehen. Der Gasaustauscher 74 umfaßt Austauscherkanäle für den Gasdonatorstrom (70-70) und den Gasakzeptorstrom (72-72). Zwischen den Anschlüssen 70 und 72 ist eine Austauschermembran 76 angeordnet, die gasdurchlässig ist.

An der Oberseite des Gehäuses 12 befinden sich Anschlüsse 78 und 80 einer Meßelektrode 82 und einer Referenzelektrode 84. Die als pH-Elektrode ausgebildete Meßelektrode 82 ist mit einer sogenannten Flüssigmembran ausgerüstet, die im dargestellten Ausführungsbeispiel eine Plastikmembran ist.

Der in Fig. 6 veranschaulichte Detektor ist ein Photometer 86. Das Photometer umfaßt eine 10 mm-Durchflußküvette 88 mit einer senkrechten Küvettenbohrung 90, dessen Enden mit Anschlüssen 92 an der Gehäusewand verbunden sind. Eine Beleuchtungsquelle 94 emitiert Licht durch eine Sammellinse 96 zum oberen Ende des Meßschenkels 90. Das Licht tritt durch den Meßschenkel und eine darunter angeordnete weitere Linse 98 durch und fällt auf einen lichtelektrischen Sensor 100. Der lichtelektrische Sensor 100 ist über ein Verbindungskabel 102 mit einer Elektronikeinheit 104 verbunden.

Die Beleuchtungsquelle 94 kann als Lumineszenzdiode 106 realisiert sein, die zum Aussenden von Licht in verschiedenen Wellenlängen zur Verfügung stehen. Alternativ kann ein Lichtleitfaserkabel 108 verwendet werden, daß extern durch eine nicht dargestellte Lampe im UV- oder visuellen Bereich beleuchtet wird. Die Beleuchtungsquelle 94 ist austauschbar ausgebildet, indem die Lumineszenzdiode 106 oder das Lichtleitfaserkabel 108 jeweils in einem Gehäuse 110 mit gleichen Abmessungen eingebaut sind.

**Patentansprüche**

1. Fließ-Injektions-Analysegerät, umfassend eine Reaktionsschleife, ein oder mehrere Pumpen (32, 34) ein Injektionsventil, einen oder mehrere Detektoren (66, 86) und eine Auswerteeinrichtung, dadurch **gekennzeichnet,**
   — daß die Pumpe (32, 34), das Injektionsventil und der/die Detektoren (66, 86) jeweils auf einer mit einer Führung (22) versehenen Grundplatte (20) angebracht sind,
   — daß die Pumpe (32, 34), das Injektionsventil und der/die Detektoren (66, 86) mit der Grundplatte (20) jeweils samt ihren eventuellen Gehäusen (36) und Trägerplatten (30) gleiche maximale Breiten- und Höhenabmessungen aufweisen,
   — daß die Grundplatten (20) mit Pumpe (32, 34), Injektionsventil und Detektoren (66, 86) auf einer Traghalterung (2) zu dem Analysegerät zusammengefügt sind und
   — daß die Grundplatten (20) auf der Traghalterung (2) mittels einer lösbaren Befestigung (24) arretiert sind.
2. Gerät nach Anspruch 1, dadurch **gekennzeichnet,** daß die Traghalterung (2) eine Schiene ist und daß die Grundplatten (20) jeweils mit einer Schwalbenschwanzführung (22) ausgebildet sind.
3. Gerät nach Anspruch 1 oder 2, dadurch **gekennzeichnet,** daß die Grundplatten (20) auf der Traghalterung (2) festgeklemmt sind.
4. Gerät nach einem der Ansprüche 1 bis 3, dadurch **gekennzeichnet,** daß die Verbindungsschläuche von Pumpe, Injektionsventil und Detektor zu einer Schlauchschiene (38) zusammengefügt sind.
5. Gerät nach einem der Ansprüche 1 bis 4, dadurch **gekennzeichnet,** daß die elektrischen Verbindungsleitungen von Pumpe (32, 34), Injektionsventil und Detektor (66, 86) als Bus (40) ausgeführt sind.
6. Gerät nach Anspruch 5, dadurch **gekennzeichnet,** daß der Bus (40) aus Flachbandkabeln oder mehradrigen Kabeln und Steckverbindungen (42) besteht.
7. Gerät nach einem der Ansprüche 4 bis 6, dadurch **gekennzeichnet,** daß die Schlauchschiene (38) bzw. der Bus (40) auf einer Seite des Gerätes in Längsrichtung der Traghalterung (2) angeordnet ist.
8. Gerät nach einem der Ansprüche 1 bis 7, dadurch **gekennzeichnet,** daß Breiten- und Höhenabmessungen jeweils gleich der Breite und Höhe genormter Einschübe oder einfacher Bruchteile davon sind.
9. Gerät nach einem der Ansprüche 1 bis 8, dadurch **gekennzeichnet,** daß die Traghalterung (2) an einer Frontplatte senkrecht zu dieser befestigt ist und mit einer Gleitführung (6) ausgebildet ist.
10. Gerät nach einem der Ansprüche 1 bis 9, dadurch **gekennzeichnet,** daß auf einer Grundplatte (20) eine senkrechte Trägerplatte (30) und an dieser die Pumpe (32, 34) bzw. das Injektionsventil befestigt ist.
11. Gerät nach Anspruch 10, dadurch **gekennzeichnet,** daß auf einer Seite der Trägerplatte (30) die Pumpe (32) bzw. das Ventil und auf der anderen Seite der Trägerplatte jeweils der Antriebsmotor (34) befestigt ist und daß jeweils ein Zapfen durch die Trägerplatte in die Pumpen- bzw. Ventilachsenkupplung greift.
12. Gerät nach einem der Ansprüche 1 bis 11, dadurch **gekennzeichnet,** daß ein Thermostat auf einer Grundplatte eingebaut ist, daß der Thermostat ein wärmeisoliertes Außengehäuse (44) mit Heizung und einen in das Außengehäuse eingeschobenen Innenkörper (46) umfaßt, auf dem ein Schlauch (64) als Reaktionsschleife aufgewickelt ist.
13. Gerät nach einem der Ansprüche 1 bis 12, dadurch **gekennzeichnet,** daß eine Diffusions- und pH-Sensorstufe (66) auf einer Grundplatte eingebaut ist, daß die Diffusions- und pH-Sensorstufe aus einem Gehäuse (12) besteht, in dem ein Gasaustauscher (74) angeordnet ist, in das Austauscherkanäle (70-70, 72-72) für den Gasdonor- und Gasakzeptorstrom münden, und in das zwei am Gehäuse angebrachte Durchflußelektroden, eine pH-sensitive Elektrode (82) mit einer Flüssigmembran (84) und eine Referenzelektrode, ragen.
14. Gerät nach Anspruch 13, dadurch **gekennzeichnet,** daß die pH-sensitive Elektrode (82) mit einer Plastikmembran ausgebildet ist.
15. Gerät nach einem der Ansprüche 1 bis 14, dadurch **gekennzeichnet,** daß ein Photometer (86) auf einer Grundplatte eingebaut ist, daß das Photometer aus einem Gehäuse besteht, in dem eine Durchflußküvette (88) mit einer senkrechten Küvettenbohrung (90) angeordnet ist, daß an einem Ende der Küvettenbohrung eine Beleuchtungsquelle (94) angeordnet ist und am anderen Ende der Küvettenbohrung ein lichtelektrischer Sensor (100) angeordnet ist.

16. Gerät nach Anspruch 15, dadurch **gekennzeichnet**, daß die Beleuchtungsquelle (94) aus einer oder mehreren Lumineszenzdioden (106) besteht.

17. Gerät nach Anspruch 15 oder 16, dadurch **gekennzeichnet**, daß die Beleuchtungsquelle durch Lichtleitfaserkabel (108) gebildet ist, an die externe Lampen angeschlossen sind.

## Claims

1. Flow injection analysis apparatus, comprising a reaction loop, one or more pumps (32, 34), an injection valve, one or more detectors (66, 86) and an evaluation device, characterised in that

— the pump (32, 34), the injection valve and the detector or detectors (66, 86) are each attached to a baseplate (20) which is provided with a guide (22),

— the pump (32, 34), the injection valve and the detector or detectors (66, 86) with the baseplate (20), in each case together with their housings (36) and support plates (30) where appropriate, have the same maximum width and height dimensions,

— the baseplates (20) with pump (32, 34), injection valve and detector or detectors (66, 86) are combined on a mounting (2) into the analysis apparatus and

— the baseplates (20) are locked on the mounting (2) by means of a releasable fixing system (24).

2. Apparatus according to Claim 1, characterised in that the mounting (2) is a rail and in that the baseplates (20) are each designed with a dovetail guide (22).

3. Apparatus according to Claim 1 or 2, characterised in that the baseplates (20) are clamped on the mounting (2).

4. Apparatus according to any of Claims 1 to 3, characterised in that the connecting tubes of pump, injection valve and detector are combined into a tube rail (38).

5. Apparatus according to any of Claims 1 to 4, characterised in that the electrical connecting leads of pump (32, 34), injection valve and detector (66, 86) are constructed as bus (40).

6. Apparatus according to Claim 5, characterised in that the bus (40) consists of flat band cables or multicore cables and plug and socket connectors (42).

7. Apparatus according to any of Claims 4 to 6, characterised in that the tube rail (38) or the bus (40) is arranged on one side of the apparatus in the axial direction of the mounting (2).

8. Apparatus according to any of Claims 1 to 7, characterised in that width and height dimensions are in each case equal to the width and height of standardised inserts or simple fractions thereof.

9. Apparatus according to any of Claims 1 to 8, characterised in that the mounting (2) is fixed to a front plate at right angles to the latter and is designed with a sliding guide (6).

10. Apparatus according to any of Claims 1 to 9, characterised in that a vertical support plate (30) is fixed on a baseplate (20), and the pump (32, 34) or the injection valve is fixed to the former.

11. Apparatus according to Claim 10, characterised in that the pump (32) or the valve is fixed on one side of the support plate (30) and in each case the drive motor (34) is fixed on the other side of the support plate, and in that in each case a peg engages through the support plate into the pump or valve shaft coupling.

12. Apparatus according to any of Claims 1 to 11, characterised in that a thermostat is incorporated on a baseplate, in that the thermostat comprises a thermally insulated external housing (44) with heating and an internal element (46) which is inserted into the external housing and on which a tube (64) is wound as reaction loop.

13. Apparatus according to any of Claims 1 to 12, characterised in that a diffusion and pH sensor stage (66) is incorporated on a baseplate, in that the diffusion and pH sensor stage consists of a housing (12) in which is arranged a gas exchanger (74) and into which exchanger channels (70-70, 72-72) for the gas donor and gas acceptor stream open, and into which project two continuous flow electrodes, a pH-sensitive electrode (82) with a liquid membrane (84) and a reference electrode, which are attached to the housing.

14. Apparatus according to Claim 13, characterised in that the pH-sensitive electrode (82) is designed with a plastic membrane.

15. Apparatus according to any of Claims 1 to 14, characterised in that a photometer (86) is incorporated on a baseplate, in that the photometer consists of a housing in which is arranged a continous flow cuvette (88) with a vertical cuvette drilling (90), in that an illumination source (94) is arranged at one end of the cuvette drilling, and a photoelectric sensor (100) is arranged at the other end of the cuvette drilling.

16. Apparatus according to Claim 15, characterised in that the illumination source (94) consists of one or more luminescence diodes (106).

17. Apparatus according to Claim 15 or 16, characterised in that the illumination source is formed by light conducting fibre bundles (108) to which external lamps are attached.

## Revendications

1. Appareil d'analyse par injection dans un écoulement, comprenant une boucle de réaction, une ou plusieurs pompes (32, 34), une soupape d'injection, un ou plusieurs détecteurs (66, 86) et un dispositif d'exploitation des données, caractérisé :

— en ce que la pompe (32, 34), la soupape d'injection et le ou les détecteurs (66, 86) sont montés chacun sur une plaque de base (20) pourvue de moyens de guidage (22),

— en ce que la pompe (32, 34), la soupape d'injection et le ou les détecteurs (66, 86), avec leurs plaques de base (20) propres, y compris éventuellement un boîtier (36) et une plaque de support (30) pour chacun, ont les mêmes dimensions hors tout en largeur et en hauteur,

— en ce que les plaques de base (20), comportant la pompe (32, 34), la soupape d'injection et le ou les détecteurs (66, 86), sont assemblées sur un support d'appui (2) de façon à former l'appareil d'analyse et

— en ce que les plaques de base (20) sont immobilisées sur le support d'appui (2) au moyen d'une fixation détachable (24).

2. Appareil suivant la revendication 1, caractérisé en ce que le support d'appui (2) est une glissière et en ce que les plaques de base (20) comportent chacune un coulisseau en queue d'aronde (22).

3. Appareil suivant la renvendication 1 ou 2, caractérisé en ce que les plaques de base (20) sont immobilisées sur le support d'appui (2) par serrage.

4. Appareil suivant l'une des revendications 1 à 3, caractérisé en ce que les tuyaux souples de raccordement de la pompe, de la soupape d'injection et du ou des détecteurs sont assemblés de façon à constituer un bloc longitudinal de tuyaux (38).

5. Appareil suivant l'une des revendications 1 à 4, caractérisé en ce que les câbles de raccordement électrique de la pompe (32, 34), de la soupape d'injection et du ou des détecteurs (66, 86) sont réalisés sous la forme d'un bus (40).

6. Appareil suivant la revendication 5, caractérisé en ce que le bus (40) est constitué de câbles-rubans ou de câbles multiconducteurs et de connecteurs à enfichage (42).

7. Appareil suivant l'une des revendications 4 à 6, caractérisé en ce que le bloc longitudinal de tuyaux (38) ou le bus (40) est disposé sur l'un des côtés de l'appareil suivant la direction longitudinale du support d'appui (2).

8. Appareil suivant l'une des revendications 1 à 7, caractérisé en ce que les dimensions en largeur et en hauteur sont égales chacune à la largeur et la hauteur de tiroirs normalisés ou à des fractions simples de ces dernières.

9. Appareil suivant l'une des revendications 1 à 8, caractérisé en ce que le support d'appui (2) est fixé sur une plaque frontale perpendiculairement à cette dernière et est pourvu d'une glissière (6).

10. Appareil suivant l'une des revendications 1 à 9, caractérisé en ce qu'une plaque porteuse (30) est fixée perpendiculairement sur une plaque de base (20) et en ce que la pompe (32, 34) ou la soupape d'injection est fixée sur cette plaque porteuse (30).

11. Appareil suivant la revendication 10, caractérisé en ce que la pompe (32) ou la soupape est fixée sur l'un des côtés de la plaque porteuse (30) et le moteur d'entraînement (34) associé est fixé sur l'autre côté de celle-ci et en ce qu'un tourillon traversant la plaque porteuse vient chaque fois en prise dans l'accouplement d'axe de la pompe ou de la soupape.

12. Appareil suivant l'une des revendications 1 à 11, caractérisé en ce qu'un thermostat est monté sur une plaque de base, ce thermostat comprenant un boîtier extérieur (44), isolé thermiquement et pourvu d'un chauffage, et un corps intérieur (46), emboîté dans le boîtier extérieur et sur lequel un tuyau souple (64) est enroulé de façon à constituer une boucle de réaction.

13. Appareil suivant l'une des revendications 1 à 12, caractérisé en ce qu'un étage de diffusion et de mesure de pH (66) est monté sur une plaque de base, cet étage de diffusion et de mesure de pH étant constitué d'un boîtier (12) dans lequel est disposé un échangeur de gaz (74) et dans lequel débouchent des conduits d'échangeur (70-70, 72-72) prévus pour le flux de gaz donneur et pour le flux de gaz accepteur et dans lequel font saillie deux électrodes de passage montées sur le boîtier, à savoir une électrode (82) sensible au pH, comportant une membrane liquide, et une électrode de référence (84).

14. Appareil suivant la revendication 13, caractérisé en ce que l'électrode (82) sensible au pH est réalisée avec une membrane en matière plastique.

15. Appareil suivant l'une des revendications 1 à 14, caractérisé en ce qu'un photomètre (86) est monté sur une plaque de base, ce photomètre étant constitué d'un boîtier dans lequel est disposée une cuvette de passage (88) comportant un perçage de cuvette (90) perpendiculaire, et en ce qu'une source d'éclairage (94) est disposée à l'une des extrémités du perçage de cuvette et un capteur photoélectrique (100), à l'autre extrémité du perçage de cuvette.

16. Appareil suivant la revendication 15, caractérisé en ce que la source d'éclairage (94) est constituée d'une ou plusieurs diodes électroluminescentes (106).

17. Appareil suivant la revendication 15 ou 16, caractérisé en ce que la source d'éclairage est constituée par des câbles de fibres optiques (108) auxquels sont disposées des lampes extérieures.

# Fig. 1

# Fig. 2

Fig. 3

a)

b)

Fig. 4

a)

b)

# Fig. 5

# Fig. 6